# EUROPÄISCHE PATENTANMELDUNG

(11) **EP 1 199 050 A1**
(43) Veröffentlichungstag der Anmeldung: **24.04.2002**
(21) Anmeldenummer: 01124947.1
(22) Anmeldetag: 19.10.2001
(51) Int. Cl.: A61C 8/00

(54) **Metallischer Prothesen-Halter und Verfahren zu seiner Herstellung**

(30) Priorität: 20.10.2000 DE 10052389
(71) Anmelder: Oraltronics Dental Implant Technology GmbH, 28199 Bremen (DE)
(72) Erfinder: Grafelmann, Hans L., Prof. Dr., 28359 Bremen (DE); Böttcher, Robert, Dr., 99885 Ohrdruf (DE)
(74) Vertreter: Eisenführ, Günther, Dipl.-Ing.

(57) **Zusammenfassung**

Ein metallischer Prothesen-Halter, der insbesondere in Form eines Pfosten zur Halterung einer Zahnkrone dient und an einem Knochenimplantat befestigt werden kann, ist außenseitig mit einem unmittelbar aufgebrachten und durch Schrumpfkräfte festgehaltenen Überzug aus gewebefreundlichem und mit der Prothese verbindbarem Material versehen. Vorzugsweise wird der Überzug in Form einer Keramik-, insbesondere Porzellanmasse flüssig bei hoher Temperatur und unter Druck aufgebracht und unter Ausbildung von Schrumpfkräften erstarren gelassen.

## Beschreibung

Die Erfindung betrifft einen an einem Knochenimplantat befestigbaren metallischen Prothesen-Halter, insbesondere einem Metallpfosten zur Halterung einer Zahnkrone auf einem Kieferknochen-Implantat, mit einem außenseitigen Belag aus gewebefreundlichem und mit der Prothese fest verbindbarem Material sowie ein Verfahren zu seiner Herstellung.

Im Rahmen der Kiefer-lmplantologie zur Halterung von Zahnersatz ist es üblich, nach dem Einwachsen des Implantatkörpers in den Kieferknochen, mit dem er im wesentlichen bündig abschließt, einen metallischen Pfosten als Halter für die eigentliche Zahnkrone einzusetzen und mit diesem auf eine von mehreren bekannten Weisen fest zu verbinden; üblicherweise erfolgt die Verbindung durch Verschrauben des im allgemeinen kreisrunden und mit einem axialen Durchgangsloch (nebst Anschlagbund für den Kopf der durchgesteckten Schraube) versehenen Pfostens mit dem Implantat. Normalerweise ist der Ansatzbereich des Pfostens am Implantat, der aus einem bis zu mehreren Millimeter dicken, einen Anschlag für die Zahnkrone bildenden Ringbund besteht, in der zervikalen Gingival-Übergangsregion vom Zahnfleischgewebe verdeckt. Zieht sich aber dieses aus medizinischen Gründen oder im Laufe der Zeit zurück, wird jener Ansatz des metallischen Pfostens unschön sichtbar.

Der Erfindung liegt daher die Aufgabe zugrunde, diesem Mißstand zu begegnen. Es war bekannt, auf einen im Querschnitt kreisrunden Zahnprothetik-Pfosten einen keramischen Belag dadurch aufzubringen, dass man ein Röhrchen aus diesem Material mit einen dem Außenquerschnitt des Pfostens entsprechenden Innenquerschnitt herstellte und auf dem Pfosten durch Verkleben oder eine ähnliche Maßnahme befestigte. Das hat jedoch den Nachteil eines erheblichen Herstellungsaufwands und der Bindung an einen über die Pfostenlänge durchgehend gleichen Querschnitt des Belags; partielle Querschnittsänderungen, wie sie beispielsweise bei abgewinkelten Zahnprothetik-Pfosten auftreten, machen das vollständige Aufbringen eines derartigen Belags unmöglich. Außerdem ist das Befestigen des Belags mit einem Haftvermittler riskant, es besteht stets die Gefahr, dass sich die Verbindung löst oder auflöst und zu Reizungen des Zahnfleisches mit Entzündungsfolgen führt.

Es ist im übrigen auch bekannt, an Stelle eines metallischen Prothesen-Halters einen solchen - in Ringform - aus einem keramischen Werkstoff individuell anzufertigen, der der oben beschriebenen Gefahr nicht ausgesetzt ist. Dessen Herstellung ist jedoch nicht nur sehr kompliziert und teuer, sondern es besteht auf Grund der Art des Materials auch erhöhte Bruchgefahr.

Die Erfindung löst das Problem dadurch, dass der Belag aus einem unmittelbar auf den Halter aufgebrachten und durch Schrumpfkräfte auf diesem festgehaltenen Überzug besteht. Durch geeignete Auswahl einerseits des metallischen Halterwerkstoffs, andererseits des Überzugmaterials ist es möglich, das beiderseitige Wärmeverhalten so aufeinander abzustimmen, dass beim Erstarren bzw. Erkalten des mit dem Überzug versehenen Halters im Überzug auf Grund dessen Schrumpfung Kräfte aufgebaut werden, die den Überzug fest und fugenlos an den von ihm umschlossenen Halter binden.

Ferner ist von besonderem Vorteil, dass die Form des Überzugs von der Form des tragenden Halters unabhängig ist und dass andererseits der Überzug jeder Halterform unschwer angepasst werden kann. Und schließlich ist der mit dem Überzug beschichtete Halter (Pfosten) - gewissermaßen industriell - vorfertigbar, und zwar in allen regelmäßig benötigten Variationen; beispielsweise können Pfosten für die Dentalprothetik in allen Umlaufstufen gemäß der Anatomie vorgesehen werden.

Zur Unterstützung der festen Verankerung des Überzugs am Halter wird man dessen Oberfläche im Bereich des Überzugs mechanisch oder chemisch aufrauhen. Das kann durch Einbringen von Retentionsrillen, durch Sandstrahlen, Ätzen, Funkenerosion, Laserstrahlung, aber auch durch Plasma-Beschichtung, Mineral- oder Metallpulverbeschichtung oder Auf sintern, jeweils ggf. unter Vakuum oder Edelgas, geschehen.

Das Überzugmaterial ist im Rahmen der vorstehend genannten Erfordernisse frei wählbar. Wichtig ist, dass der fertige Überzug möglichst fugen- und porenfrei und auf jeden Fall biokompatibel, also vornehmlich gewebefreundlich ist. Ferner soll er glasierbar und nachfräsbar sein. Außer bestimmten Kunststoffen kommen vor allem keramische Werkstoffe, insbesondere Porzellane, aber auch Gemische beider Materialien in Frage. Alle diese Überzugwerkstoffe können zur Anpassung an das sie umgebende Zahnfleisch in geeigneter Weise eingefärbt werden; ferner ist die Aufbringung einer effekt-erhöhenden Zwischenschicht möglich.

Obwohl der Halter, etwa ein auf ein Kieferknochen-Implantat aufzusetzender Pfosten üblicherweise getrennt hergestellt und erst einige Zeit nach dem Einsetzen des Implantats mit diesem verbunden wird, kann der Halter auch mit dem Implantat aus einem Stück bestehen, aber gleichwohl mit dem erfindungsgemäßen Überzug versehen werden.

Sofern der für den Überzug verwendete Werkstoff ausreichende Eigenstabilität besitzt, kann er sich über das freie Pfostenende hinaus rohrförmig fortsetzen. Auch kann die (seitliche) Ansetzbarkeit von Verbindungselementen zu Nachbarzähnen bzw. -kronen durch partielles Weglassen des Überzuges (beschichtungsfreie Zonen) vorgesehen werden.

Ein erfindungsgemäßes Verfahren zur Herstellung eines metallischen Prothesen-Halters mit einem außenseitigen Belag aus gewebefreundlichem und mit einer Prothese, insbesondere Zahnkrone festverbindbaren Material zeichnet sich dadurch aus, dass der Belag in flüssiger bzw. pastöser Form in situ unmittelbar auf den Halter aufgebracht und unter Ausbildung von Schrumpfkräften erstarren gelassen wird. Das Ergebnis ist ein Halter mit einem fest sitzenden und spaltfreien Überzug aus einem Werkstoff, der sich mit der darüber geschobenen Prothese, also namentlich einer Zahnkrone verbinden lässt. Beispielsweise kann der metallische Halter in eine geeignete Form eingelegt und bezüglich seines Innenraums abgedichtet werden, worauf - wiederum beispielsweise - flüssige Porzellanmasse unter Druck und bei hoher Temperatur auch des Halters in die Form eingebracht wird und den Überzug bildet. Es versteht sich, dass es auf diese Weise unschwer möglich ist, auch komplexere, insbesondere abgewinkelte Außenflächen beispielsweise eines Implantatpfostens für die Dentalprothetik mit einem fest anhaftenden und keinerlei Öffnungen besitzenden Überzug zu versehen.

Wesentlich ist naturgemäß, dass das Metall des Halters (Pfostens) während der hohen Temperatur eines Aufbrennprozesses hitzebeständig sowie expansions- und kontraktionsbeständig ist. Als geeignet hat sich u.a. eine Edelmetall-Legierung aus ca. 53% Gold, 22% Platin und 25% Palladium sowie 0,1% Iridium erwiesen.

Das Aufbringen des Überzugs kann grundsätzlich durch alle bekannten (kalten und heißen) Beschichtungsverfahren erfolgen, also durch Aufbrennen, -sintern und -pressen, mittels Abdeck- bzw. Aufschweißtechnik etc. Der beispielsweise als Material für den Überzug verwendete Keramikwerkstoff enthält > 55 Gew.-% SiO₂, ferner Ka₂O, Al₂O₃, Na₂O, ZnO, Li₂O, CaO und Pigmente.

Die Zeichnung veranschaulicht die Erfindung an Ausführungsbeispielen, die - in stark vergrößertem Maßstab - als Prothesen-Halter einen im Kern zylindrischen Dentalprothetik-Pfosten darstellen, welcher einerseits mit einem Kieferknochen-Implantat verschraubt wird und andererseits die (ebenso wie ersteres nicht dargestellte) Zahnkrone trägt. Es zeigt:
- Fig. 1: einen geraden Pfosten im Querschnitt; und
- Fig. 2: einen abgewinkelten Pfosten im Querschnitt.

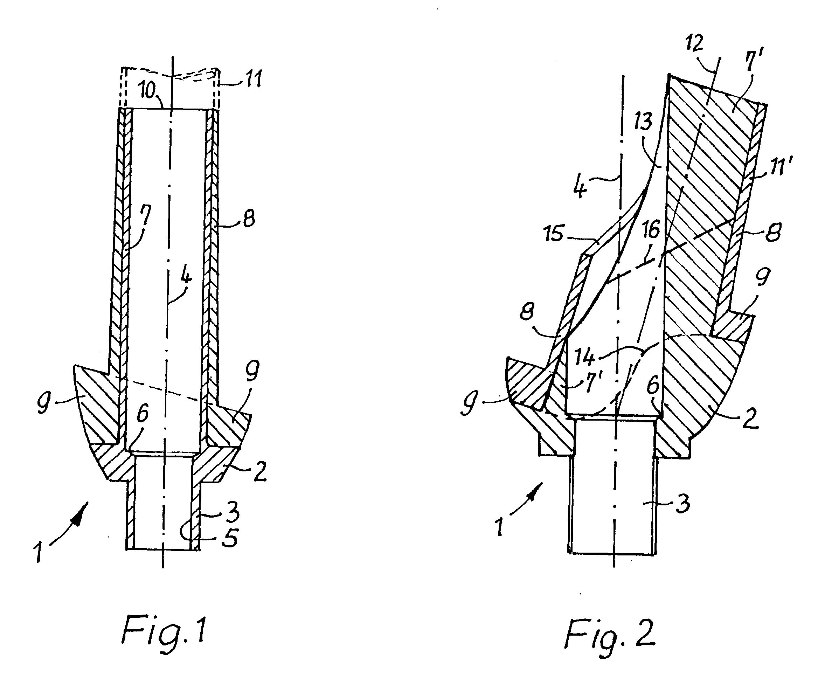

Der in Fig. 1 im Ganzen mit 1 bezeichnete eigentliche Pfosten (Pfostenkern) besteht aus einem Sockel 2 in Form eines Ringbundes von ca. 0,5 - 1 mm Dicke, an den sich einerseits (hier nach unten) ein Kopplungselement 3 zum Einsatz in ein - nicht dargestelltes - Kieferknochen-Implantat anschließt. In Richtung der Achse 4 wird das Kopplungselement 3, welches beispielshalber die Form eines Sechskantes als Verdrehsicherung hat, von einer Bohrung 5 durchsetzt, die im Einbauzustand den Schaft einer (ebenfalls nicht dargestellten) Schraube aufnimmt, die sich mit ihrem Kopf am Bund 6 abstützt und zwecks Befestigung des Pfostens 1 in das Implantat geschraubt wird.

Andererseits erstreckt sich in entgegengesetzter Richtung vom Sockel 2 ein zylindrischer rohrförmiger Pfostenabschnitt 7 von einer zum Einführen in eine Zahnkrone ausreichenden Länge. Bekleidet ist der Pfostenabschnitt 7 mit einem Überzug 8 aus einer Porzellanmasse, der von zirkulären Schrumpfkräften fest in seiner Stellung am Abschnitt 7 gehalten wird. Zum Sockel 2 hin verdickt sich der Überzug 8 zu einer Sockelauflage 9, deren schräge Oberfläche eine umlaufend unterschiedliche Dicke bewirkt; nach dem Ein-setzen des Pfostens 1 in ein Kieferimplantat befindet sich die größte Dicke auf der Gaumenseite, die kleinste Dicke auf der Lippenseite. Die Gesamtlänge oberhalb des Sockels 2 beträgt beispielsweise 5 mm.

Im Einzelfall kann der Überzug 8 sich über das freie Ende 10 des Abschnitts 7 hinaus in einem gestrichelt angedeuteten, ebenfalls röhrchenförmigen Ansatz 11 fortsetzen. Innenseitig stellt der Ansatz 11 einen im Querschnitt kreisrunden Kanal für den Durchgang des Kopfes einer - nicht dargestellten - Schraube zur Befestigung des Pfostens 1 an einem Implantat dar.

Der in Fig. 2 dargestellte abgewinkelte Pfostenabschnitt 7' hat - wegen des erforderlichen vertikalen Schraubkanals entlang der Achse 4 - keine Röhrenform, sondern die der Querschnittsdarstellung entnehmbare, zur Achse 12 im wesentlichen zentral-symmetrische, jedoch durch den Schraubkanal 13 unterbrochene Stiftform. Auch hat der Sockel 2 eine sich über den Umfang ändernde Dicke (strichpunktierte Linie 14 in Fig. 2). Demzufolge muss sich der Überzug 8 mit seiner verdickten Sockelauflage 9 dem anpassen, und er hat außerdem wegen des Schraubkanals 13 einen das Einführen der Schraube und den Zugang des Schraubwerkzeugs erlaubenden Ausschnitt 15. Es ist möglich, den Pfostenabschnitt 7' entlang der gestrichelten Linie 16 zu kürzen, so dass zum freien Ende 10 hin der Überzug 8 mit seinem Abschnitt 11' den verbliebenen Pfostenabschnitt 7' überragt, wegen des Ausschnitts 15 allerdings nicht geschlossen rohrförmig.

Der erfindungsgemäße Überzug 8 muss nicht die in der Zeichnung dargestellte mehr oder minder gleichförmige Dicke über den Umfang des Pfostenabschnitts 7 bzw. 7' aufweisen. Vielmehr ist es beispielsweise möglich, durch über den Umfang unterschiedliche Beschichtungsdicke des Überzugs 8 aus einem geraden Pfosten 1 (Fig. 1) innerhalb gewisser Grenzen einen abgewinkelten zu machen. Auch kann durch eine außenflächig konvexe Beschichtung mit dem Überzug 8 ein Prothetikelement hergestellt werden, welches nicht als Halter im vorstehend erörterten Sinne, sondern als gingival- bzw. papillenformendes Interimselement sofort nach Einsetzen des Implantats in den Kiefer an diesem befestigt werden kann, um auf Grund seiner gewebefreundlichen und fugenlosen Ausbildung die reizlose An- bzw. Ausformung des Gingivalrandes während der Einheilphase des Implantats zu gewährleisten. In ähnlichem Sinne ist es ferner möglich, in gleicher Weise wie den Überzug 8 eine volle Zahnkrone (unter Freilassung des Schraubkanals) auf dem Pfostenabschnitt 7 unmittelbar aufzubringen und durch die im Keramikmaterial der Krone dabei entstehenden Schrumpfkräfte zementfrei und fugenlos dauerhaft fest zu verankern.

## Patentansprüche

1. An einem Knochenimplantat befestigbarer metallischer Prothesen-Halter, insbesondere Metallpfosten zur Halterung einer Zahnkrone auf einem Kieferknochen-Implantat,
mit einem außenseitigen Belag aus gewebefreundlichem und mit der Prothese verbindbaren Material,
**dadurch gekennzeichnet, dass** der Belag aus einem unmittelbar auf den Halter (1) aufgebrachten und durch Schrumpfkräfte auf diesem festgehaltenen Überzug (8) besteht.

2. Halter nach Anspruch 1,
**dadurch gekennzeichnet, dass** die Oberfläche des Halters (1) im Bereich des Überzugs (8) aufgerauht ist.

3. Halter nach Anspruch 1 oder 2,
**dadurch gekennzeichnet, dass** der Überzug (8) aus flüssig bei hoher Temperatur und unter Druck aufgebrachter Keramik-, insbesondere Porzellanmasse besteht.

4. Halter nach Anspruch 1 oder 2,
**dadurch gekennzeichnet, dass** der Überzug (8) aus Kunststoff besteht.

5. Halter nach einem der vorhergehenden Ansprüche,
**dadurch gekennzeichnet, dass** der Überzug (8) eingefärbt ist.

6. Halter nach einem der vorhergehenden Ansprüche,
**dadurch gekennzeichnet, dass** der Halter (1) mit dem Implantat aus einem Stück besteht.

7. Metallpfosten zur Halterung einer Zahnkrone nach einem der vorhergehenden Ansprüche, mit einem gegenüber dem Abschnitt (3) für die Befestigung am Implantat abgewinkelten Halterungsabschnitt,
**dadurch gekennzeichnet, dass** der Überzug (8) über den Verbindungsquerschnitt zwischen beiden Abschnitten durchgeht.

8. Metallpfosten nach Anspruch 7,
**dadurch gekennzeichnet, dass** sich der Überzug (8) über das freie Pfostenende (10) hinaus rohrförmig fortsetzt.

9. Verfahren zur Herstellung eines metallischen Prothesen-Halters mit einem außenseitigen Belag aus gewebefreundlichem und mit einer Prothese, insbesondere Zahnkrone fest verbindbaren Material,
**dadurch gekennzeichnet, dass** der Belag in flüssiger bzw. pastöser Form in situ unmittelbar auf den Halter aufgebracht und unter Ausbildung von Schrumpfkräften erstarren gelassen wird.
